(19) Europäisches Patentamt
European Patent Office
Office européen des brevets

(11) **EP 2 262 092 B1**

(12) **EUROPEAN PATENT SPECIFICATION**

(45) Date of publication and mention
of the grant of the patent:
**07.03.2012 Bulletin 2012/10**

(51) Int Cl.:
***H02M 7/5387*** (2007.01)

(21) Application number: **10006087.0**

(22) Date of filing: **11.06.2010**

(54) **Inverter controlling apparatus, and air conditioner and washer using the same**

Umrichtersteuerungsvorrichtung und Klimaanlage und diese Vorrichtung benutzende Waschmaschine

Appareil de contrôle d'inverseur, et climatiseur et machine à laver l'utilisant

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **11.06.2009 JP 2009139769**

(43) Date of publication of application:
**15.12.2010 Bulletin 2010/50**

(73) Proprietor: **Hitachi, Ltd.**
**Chiyoda-ku**
**Tokyo 100-8280 (JP)**

(72) Inventors:
• **Hatsuse, Wataru**
**Tokyo 100-8220 (JP)**
• **Notohara, Yasuo**
**Tokyo 100-8220 (JP)**
• **Li, Dongsheng**
**Tokyo 100-8220 (JP)**
• **Aoyagi, Shigehisa**
**Tokyo 100-8220 (JP)**
• **Sakamoto, Kiyoshi**
**Tokyo 100-8220 (JP)**

(74) Representative: **Beetz & Partner**
**Patentanwälte**
**Steinsdorfstrasse 10**
**80538 München (DE)**

(56) References cited:
EP-A1- 1 464 749      JP-A- 6 219 148
JP-A- 2009 124 869      US-A- 4 788 485
US-A1- 2008 079 377

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

This invention relates to an apparatus for controlling an inverter, and more specifically to a method of detecting the output current of an inverter and also a technique for detecting the output currents (phase-currents) flowing through the DC bus. An inverter control apparatus incorporating therein a current reproduction unit as defined in the preamble portion of patent claim 1 is known from US 2008/079377 A1

There is an increasing demand for reducing the size and cost of an apparatus for driving an electric motor used in an air conditioner or in a washer, and there is an increasing demand also for increasing the efficiency and output of such apparatus. Multitudes of techniques have recently been developed to satisfy such demands.

In order to satisfy the requirement for improving the efficiency of the electric motor driving apparatus, a permanent magnet motor is usually used to be driven by the apparatus. An example of an attempt to further improve the efficiency is the design of an electric motor which develops a high efficiency in the normal operation (in the low rotational speed range) of an air conditioner or a washer.

However, if such an electric motor is designed to achieve a high efficiency at a low rotational speed, it becomes difficult for the motor to develop a high output for the reason described later.

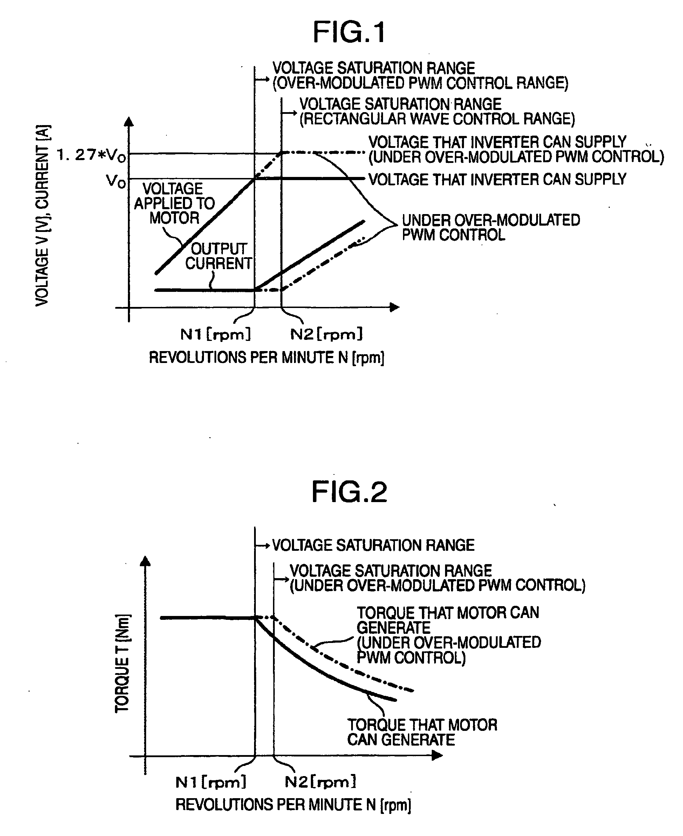

Here, Figs. 1 and 2 graphically illustrate the characteristics of the electric motor being driven.

Fig. 1 graphically shows the relationship between the rotational speed, i.e. a number of revolutions per minute or rpm for short, of the motor and the voltage applied to the motor from the inverter, and between the rpm and the current to be outputted from the inverter. Fig. 2 graphically shows the relationship between the rpm and the output torque, of the motor.

Since a permanent magnet motor induces back emf, i.e. back electromotive force, whose magnitude is proportional to its rpm, the voltage developed across the inverter increases in proportion to the rpm, as represented with a solid curve (designating the inverter voltage) in Fig. 1, and the motor can generate a constant torque as shown in Fig. 2.

As seen in Fig. 1, however, when the rpm of the motor exceeds N1, an amount of the counter emf induced across the motor exceeds the voltage Vo that can be supplied from the inverter. The region of rpm equal to or greater than N1 is termed "voltage saturation range". Specifically, an electric motor designed to achieve a high efficiency exhibits a low value of Ni that is the beginning point of the voltage saturation range. In other words, the high-efficiency motor can be said to have a narrow range of normal operation and a wide range of voltage saturation.

Therefore, in order to enable such an electric motor to deliver a high output (to rotate at high rpm's), the "field-weakening control" is used in the voltage saturation range in excess of N1 in Fig. 1.

As shown with a solid curve (designating the inverter output current) in Fig. 1, the induced emf is apparently reduced by causing reactive current to flow through the motor in the range of high-speed rotation equal to or greater than N1. Accordingly, the range of rpm's attainable can be expanded. However, as seen also with a solid curve (designating the inverter output current) in Fig. 1, the inverter output current increases for rpm's exceeding Ni so that the efficiency of the electric motor driving apparatus as whole is made undesirably lowered. Further, as seen with a solid curve in Fig. 2, the output torque that can be developed is also decreased with the increase with rpm when rpm exceeds N1.

Conventionally, on the other hand, the over-modulated PWM control has been proposed as a method for increasing the voltage that can be supplied from the inverter.

It becomes possible, as shown by the broken curves in Fig. 1, to increase the inverter voltage Vo that can be supplied under the normal PWM control using a sinusoidal wave, by a factor of about 1.27 at maximum through the use of the over-modulated PWM control. Accordingly, the operation range can be extended up to an rpm of N2, as shown by a long-and-short-dash curves in Fig. 1.

Consequently, an increase in the reactive current can be suppressed in the case where the field-weakening control is applied to the motor in the range of high-speed rotation, so that the efficiency and the torque can be prevented from being decreased.

In order to meet the requirement for reducing the size and the cost of an electric motor driving apparatus, a control method has been proposed which dispenses with a phase-current sensor.

For example, JP 02-197295 A discloses such a control method as dispenses with a phase-current sensor, according to which the instantaneous phase currents of the motor are detected on the basis of the current flowing through the DC bus in the circuit of the inverter that is driving the motor and on the basis of the switching status of the inverter, so that the phase currents of the motor are reproduced.

According to this method, which uses PWM signals for driving the inverter, that instantaneous phase currents for the two phases of the motor which appear instantaneously in the current flowing through the DC bus of the inverter circuit, are sampled and held so as to reproduce the motor phase currents.

As another example, JP 2003-219678 A discloses a control method, according to which, on the basis of the average current supplied through the DC bus to the inverter and the DC voltage applied to the inverter, the DC current flowing into the motor is derived and the motor torque current is also detected.

As described above, according to the method disclosed in JP 02-197295 A, the current reproduction fails if only the instantaneous phase current of a single phase appears in the DC-bus current under the over-modulated condition.

According to the method disclosed in JP 2003-219678 A, which presupposes the existence of the range of rpm's where the reactive current is not supplied, the current reproduction fails in the range of rpm's where the reactive current flows as in the field-weakening control.

In other words, the control methods disclosed in those Japanese patent documents were not able to reproduce the phase currents and therefore failed to drive the electric motor in the range where both the over-modulated PWM control and the field-weakening control are used.

Further, the conventional method using the over-modulated PWM control presupposes the use of a sensor for detecting the motor phase currents but does not consider the technique for detecting the DC-bus current when the over-modulated PWM control is under way.

Accordingly, in the case where the combination of the conventional technique and only the field-weakening control was used, there was a problem that reactive current flows excessively. In addition, there was a problem that according to the control using the conventional technique, the over-modulated PWM control and the field-weakening control all together is not feasible.

US 2008/079377 A1 discloses an inverter control apparatus incorporating therein a current reproduction unit which inputs information from a DC-bus current detector for detecting the instantaneous phase currents that flow into an electric motor and that is contained in the DC-bus current flowing into the inverter from a DC power source, and which reproduces phase currents that flow into the motor on the basis of the values of the instantaneous phase currents and the voltage commands for the voltages to be applied to the inverter is calculated by using the phase currents.

JP 2009/124869 A shows a V/F control system for synchronous electric motors comprising a controller that allows a low-pass filter to apply an averaging processing on a DC current detected by a shunt resistor, and corrects a speed command value of the synchronous electric motor so as to suppress ripple components contained in the averaged DC current.

The object of this invention is to reduce the reactive current that flows through the electric motor.

SUMMARY OF THE INVENTION

This object is accomplished with an inverter control apparatus as claimed with claim 1.

Dependent claims are directed on features of preferred embodiments of the invention.

According to this invention, the reactive current that flows into the motor can be reduced.

BRIEF DESCRIPTION OF THE DRAWINGS

Fig. 1 graphically shows the relationship between the rotational speed, i.e. revolutions per minute or rpm for short, of the motor and the voltage applied to the motor from the inverter, and between the rpm and the current outputted from the inverter;
Fig. 2 graphically shows the relationship between the rpm of the motor and the output torque;
Fig. 3 shows in block diagram the overall structure of an electric motor driving apparatus as a first embodiment of this invention;
Fig. 4 is the signal flow diagram of a process which the current reproduction unit performs;
Fig. 5 diagrammatically shows how sampling in the first embodiment is performed and the relationship among modulating signals from a PWM generator and appearing across a shunt register under the over-modulated condition, switching status and DC-boss current;
Fig. 6 is the signal flow diagram of a process which the current reproduction unit performs in the case where an analog filtering circuit is used;
Fig. 7 shows in block diagram the structure of the current reproduction unit 6C used in the first embodiment;
Fig. 8 diagrammatically shows how the DC-bus current is sampled in the range of low rpm;
Fig. 9 is an enlarged version of Fig. 8(d), drafted for detailed explanation;
Fig. 10 schematically shows the overall structure of an air conditioner using the method of current reproduction according to the first embodiment;
Fig. 11 graphically shows the relationship between the rpm of the electric motor used to drive the compressor and the efficiency;
Fig. 12 schematically shows the overall structure of a washer to which a second embodiment of this invention is applied; and

Fig. 13 graphically shows the operating points of the electric motor used to drive the washer.

DETAILED DESCRIPTION OF THE EMBODIMENTS

This invention will now be described below by way of embodiments with reference to the attached drawings.

[Embodiment 1]

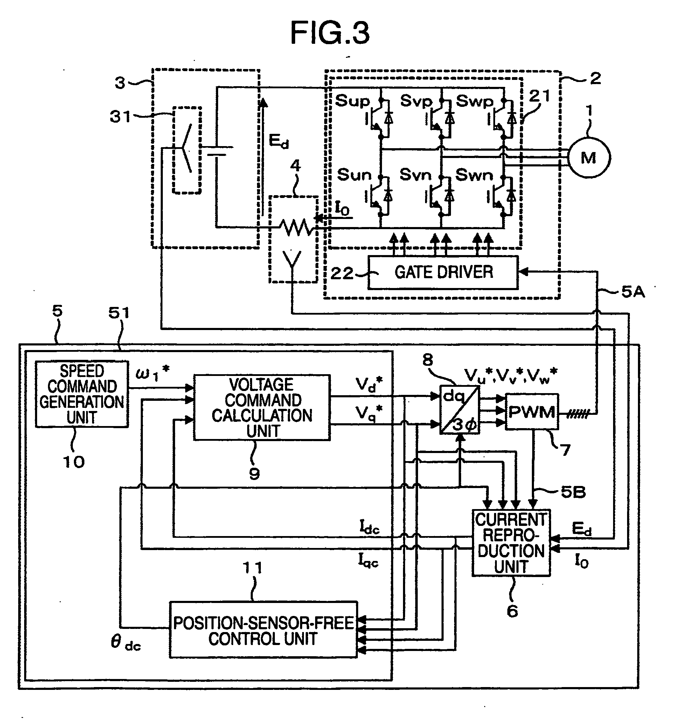

A first embodiment of this invention will be described below in reference to Figs. 3 through 6.

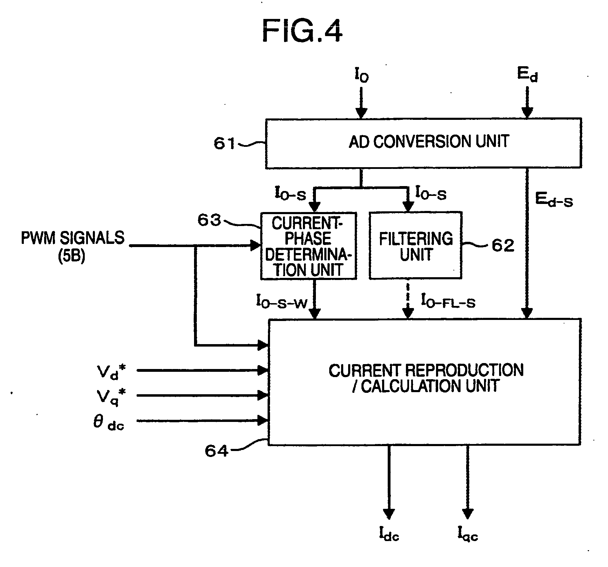

Fig. 3 shows the structure of an electric motor driving apparatus as a first embodiment of this invention, and Fig. 4 is the signal flow diagram of a process which a current reproduction unit performs.

An inverter 2 consists mainly of an inverter main circuit 21 built with IGBTs (insulated gate bipolar transistors) and diodes, and a gate driver 22 for generating gate signals to be supplied for the IGBTs on the basis of the pulse width modulation (PWM) signals 5A delivered from a controller 5. The DC voltage $E_d$ supplied from a DC power source 3 is converted to three-phase AC voltages on the basis of the PWM signals 5A, and the three-phase AC voltages are supplied to an electric motor 1.

A DC-bus current detector 4 detects the DC-bus current $I_0$ flowing into the inverter 2, by using a DC shunt resistor, and delivers the DC-bus current $I_0$ to the controller 5.

A DC voltage detector 31 detects the DC voltage $E_d$ to be applied to the inverter 2, and delivers the DC voltage $E_d$ to the controller 5. It is to be noted here that the DC power source 3 may be replaced by the combination of an AC power source and a rectifier.

The controller 5 comprises a current reproduction unit 6, a PWM generator 7, a dq inverter 8, a voltage command calculation unit 9, a speed command generation unit 10 and a control unit 11 having no position sensor. This control unit 11 is referred to hereafter as the "position-sensor-less control unit".

The current reproduction unit 6 reproduces the motor currents (Id, Iq) on the rotating (d-q) frame as the reproduced currents (Idc, Iqc), by using the DC-bus current $I_0$ detected by the DC-bus current detector 4, the DC voltage $E_d$ detected by the DC voltage detector 31, the PWM signals 5B delivered from the PWM generator 7, the voltage command values (Vd*, Vq*) delivered from the voltage command calculation unit 9, and the inverter estimated rotating phase θdc delivered from the position-sensor-less control unit 11.

The PWM generator 7 generates the PWM signals 5A on the basis of AC voltage command values (Vu*, Vv*, Vw*) delivered from the dq inverter 8.

The dq inverter 8 converts the voltage command values (Vd*, Vq*) into the AC voltage command values (Vu*, Vv*, Vw*).

The voltage command calculation unit 9 calculates the voltage command values (Vd*, Vq*) for the voltages applied to the motor 1 by using the reproduced currents (Idc, Iqc) and a speed command value ω1*.

The speed command generation unit 10 delivers the speed command value ω1* to the voltage command calculation unit 9.

The position-sensor-less control unit 11 estimates the rotating phase θdc of the motor 1 by using the reproduced currents (Idc, Iqc) and the voltage command values (Vd*, Vq*).

The current reproduction unit 6, the detailed structure of which is shown in Fig. 4, comprises an AD conversion unit 61, a filtering units 62, a current-phase determination unit 63 and a current reproduction-calculation unit 64.

The AD conversion unit 61 converts the DC-bus current $I_0$ and the DC voltage $E_d$ both in analog quantities into $I_{0-S}$ and $E_{0-S}$ both in digital quantities, respectively.

The filtering unit 62 filters the digital DC-bus current $I_{0-S}$ to deliver average DC-bus current $I_{0-FL-S}$. The term "average" used here refers to "filtered". The filtering process used here includes, for example, the filtering with first order lag and the arithmetic-average filtering.

The current-phase determination unit 63 determines which phase current of the motor 1 the digital DC-bus current $I_{0-S}$ is, on the basis of the PWM signals 5B.

The current reproduction-calculation unit 64 reproduces the motor currents (Id, Iq) on the rotating (d-q) frame as the reproduced currents (Idc, Iqc), by using the phase-determined DC-bus current $I_{0-S-W}$ (regarded as W-phase and therefore labeled with subscript -w), the averaged DC-bus current $I_{0-FL-S}$, the digital DC voltage $E_{d-S}$, the PWM signals 5B, the voltage command values (Vd*, Vq*) and the inverter estimated rotating phase θdc.

The dq inverter 8 calculates the AC voltage commands values (Vu*, Vv*, Vw*) on the basis of the voltage command values (Vd*, Vq*) delivered from the voltage command calculation unit 9. The calculation executed by the dq inverter 8 is based on the following expression (1).

[Expression 1]

$$
\begin{bmatrix} V_u^* \\ V_v^* \\ V_w^* \end{bmatrix} = \begin{bmatrix} 1 & 0 \\ \cos\left(\dfrac{2}{3}\pi\right) & \sin\left(\dfrac{2}{3}\pi\right) \\ \cos\left(\dfrac{4}{3}\pi\right) & \sin\left(\dfrac{4}{3}\pi\right) \end{bmatrix} \begin{bmatrix} \cos(\theta_{dc}) & -\sin(\theta_{dc}) \\ \sin(\theta_{dc}) & \cos(\theta_{dc}) \end{bmatrix} \begin{bmatrix} V_d^* \\ V_q^* \end{bmatrix} \qquad (1)
$$

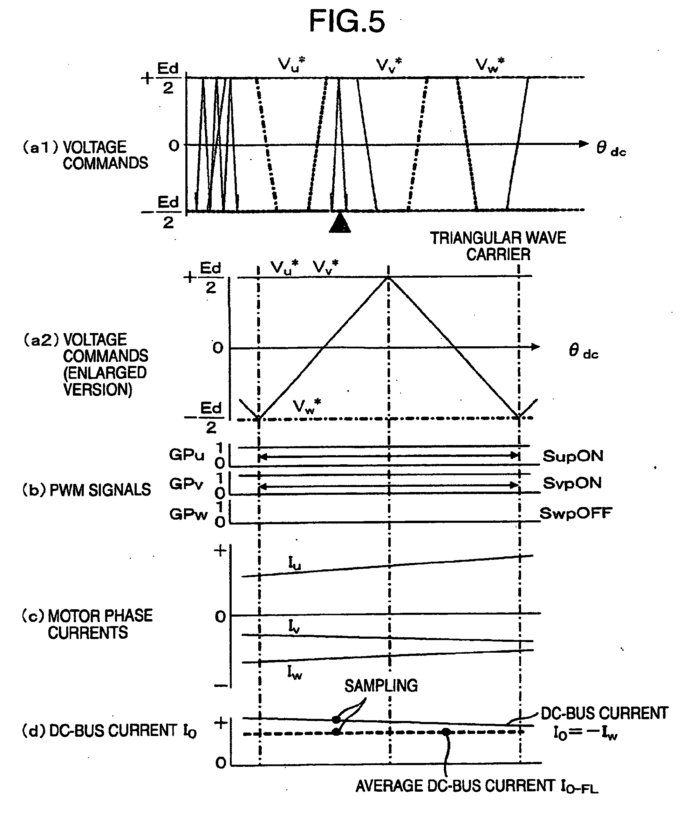

The PWM generator 7 converts the AC voltage command values Vu*, Vv* and Vw* to a set of the PWM signals 5A, each of which is for each of the phases u, v or w. The gate driver 22 in the inverter 2 drives the switching elements in response to the PWM signals 5A, so that the AC voltages corresponding to the voltage command values Vq*, Vd* are applied to the motor 1. The relationship among the AC voltage command values Vu*, Vv*, Vw*, the PWM carrier waveform and the PWM signals 5A, will be described later in reference to Fig. 5.

According to this embodiment, the electric motor driving apparatus is described as employing a conventional position/current-sensor-free vector control procedure 51.
However, there is no limitation to the control method and structure preferred specifically for use with the electric motor driving apparatus. In other words, this embodiment can be implemented in any control procedure which is based on the reproduction of the motor phase currents on the basis of the DC-bus current.

The detailed operation of the current reproduction unit 6, which characterizes this embodiment, will now be described in reference to Figs. 4 and 5.

Fig. 5 shows the relationship between the PWM signals and the DC-bus current.

In diagram (a1) are shown the AC voltage command values Vu* (trapezium in solid line), Vv* (trapezium in dotted line) and Vw* (trapezium in long-and-short-dash line) during one period, and the triangular carrier signal (only three peaks being shown to the left).

Diagram (a2) is the magnification of that area in diagram (a1) which is marked with a black triangle, showing the AC voltage command values and the triangular carrier signal. As shown in diagram (a2), the AC voltage command values Vu*, Vv* take a value of +Ed/2 while the AC voltage command value Vw* takes a value of -Ed/2.

Diagram (b) shows PWM signals produced according to the relationship shown in diagram (a2).

Diagram (c) shows the motor phase currents flowing in response to the PWM signals.

Diagram (d) shows the DC-bus current $I_{0\text{-}S}$ (solid line) and the average DC-bus current $I_{0\text{-}FL\text{-}S}$ (dotted line). As shown in diagram (d), the waveforms of the DC-bus current $I_{0\text{-}S}$ and the average DC-bus current $I_{0\text{-}FL\text{-}S}$ are provided with the sampling points taken according to the current detection method of this embodiment. The current detection method of this embodiment is to simultaneously utilize the average DC-bus current $I_{0\text{-}FL}$ and the instantaneous phase current $I_{0\text{-}S}$ for a single phase.

In reference to Fig. 5, the relationship between the PWM signals and the DC-bus current will first be described in the case of the over-modulated PWM procedure, that is, when the rpm exceeds N1 as in Figs. 1 and 2.

Fig. 5 shows the case where the maximum values of the sinusoidal amplitudes of thet AC voltage command values Vu*, Vv*, Vw* become greater than the value of half the DC voltage (Ed/2), that is, where excessive modulation occurs in the over-modulated PWM procedure. In this case, as shown in diagram (a1), the AC voltage command values are truncated by the value equal to half the DC voltage (Ed/2), that is, limited between ±Ed/2. Further, there occur intervals along the axix of the inverter estimated rotating phase θdc in which the upper and lower limiting values of the AC voltage commands overlap one another.

Under the condition that the AC voltage commands Vu* and Vv* for phases U and V are limited to the value equal to half the DC voltage (Ed/2) and overlap each other as seen in diagram (a2), the DC-bus current $I_{0\text{-}S}$ takes a continuous waveform of instantaneous current (here having a descending gradient for illustrative purpose) as seen in diagram (d). Consequently, only the instantaneous current for phase W, which is the smallest phase-current and lies under the triangular carrier waveform, becomes available as seen in diagram (a2). In other words, the instantaneous currents for phases U and V, which lie over the triangular carrier waveform, cannot be observed.

Since the averaged DC-bus current $I_{0\text{-}FL\text{-}S}$ lies under the DC-bus current $I_{0\text{-}S}$, the former seems as if it is not an averaged quantity. Actually, however, since the averaged DC-bus current $I_{0\text{-}FL\text{-}S}$ lies over the DC-bus current $I_{0\text{-}S}$ in some regions other than that which is shown in diagram (d), diagram (d) may be considered to represent just the averaged characteristic.

Under the condition of diagram (a2) in Fig. 5, sinse the instantaneous phase current for only a single phase is observable, the reproduction of current is impossible by the use of the current detecting method disclosed in JP-A-02-197295, which reproduces currents of three phases on the basis of instantaneous currents for two phases.

Further, since the rpm of the motor is increased, starting from under the excessively over-modulated condition as shown in Fig. 5, the reproduction of current is impossible even when the method disclosed in JP-A-2003-219678 is used which reproduces currents by using electric power, as described above, if the field weakening control is used to cause reactive current to flow through the motor. Consequently, the drive of motor becomes impossible.

Now, the detailed operation of the current reproduction unit 6 of this embodiment, which is different from the counterparts disclosed in JP-A-02-197295 and JP-A-2003-219678, will be described in reference to Figs. 4 and 5.

In Fig. 4, an AD conversion unit 61 samples and holds the DC-bus current $I_0$ detected by the DC-bus current detector 4, and delivers the sampled DC-bus current $I_{0-S}$. In like manner, the AD conversion unit 61 samples and holds the DC voltage $E_d$ detected by the DC voltage detector 31, and delivers the sampled DC voltage $E_{d-s}$.

A filtering unit 62 filters the sampled DC-bus current $I_{0-S}$ sampled and held by the AD conversion unit 61, and delivers the sampled average DC-bus current $I_{0-FL-S}$.

A current-phase determination unit 63 determines which of U, V and W phases the sampled DC-bus current I0-S belongs to, on the basis of the PWM signals 5B generated by the PWM generator 7. Fig. 4 shows the case where $I_{0-S}$ is sampled from the waveform of $I_0$ shown in diagram (d) of Fig. 5 and the W-phase current is identified by the current-phase determination unit 63. The sampled DC-bus current $I_{0-S}$ is referred to as the sampled W-phase DC-bus current $I_{0-S-W}$.

A current reproduction-calculation unit 64 calculates the motor currents Idc and Iqc by using the sampled W-phase DC-bus current $I_{0-S-W}$, the sampled average DC-bus current $I_{0-FL-S}$, the sampled DC voltage $E_{d-s}$, and the following expressions (2), (3) and (4).

[Expression 2]

$$I_u + I_v + I_{0\text{-}S\text{-}W} = 0 \qquad (2)$$

[Expression 3]

$$\begin{bmatrix} I_{dc} \\ I_{qc} \end{bmatrix} = \frac{2}{3} \begin{bmatrix} \cos(\theta_{dc}) & \cos\left(\theta_{dc} - \frac{2}{3}\pi\right) & \cos\left(\theta_{dc} - \frac{4}{3}\pi\right) \\ -\sin(\theta_{dc}) & -\sin\left(\theta_{dc} - \frac{2}{3}\pi\right) & -\sin\left(\theta_{dc} - \frac{4}{3}\pi\right) \end{bmatrix} \begin{bmatrix} I_u \\ I_v \\ I_{0\text{-}S\text{-}W} \end{bmatrix} \qquad (3)$$

[Expression 4]

$$E_{d\text{-}S}I_{0\text{-}FL\text{-}S} = \frac{3}{2}\left(V_d^* I_{dc} + V_q^* I_{qc}\right) \qquad (4)$$

The expression (2) is derived from Kirchhoff's rule: the sum of the U-, V- and W-phase currents Iu, Iv and Iw vanishes.

The expression (3) is the conversion formula that, using the inverter estimated rotating phase θdc of the motor rotating phase, transforms the U-, V- and W-phase currents Iu, Iv and Iw of the motor into the coordinate points in the rotating (d-q) frame so as to produce the motor currents Idc, Iqc in the d-q coordinate system.

The expression (4) relates to the electric power with the power loss in the inverter circuit neglected, and indicates that the electric power derived from the voltage command values Vd*, Vq* and the motor currents Idc, Iqc in the d-q coordinate system is equal to the electric power derived from the DC voltage $E_d$ and the average DC-bus current $I_{0\text{-}FL}$.

There are four unknown variables, i.e. the U- and V-phase currents Iu, Iv of the motor, and the motor currents Idc, Iqc, in the expressions (2), (3) and (4). Since there are four expressions as the expression (3) includes two formulas relating to the d- and q-axes, then the number of the unknowns is equal to the number of the calculating expressions. As a result, the U- and V-phase currents Iu, Iv of the motor, and the motor currents Idc, Iqc can be obtained.

As described above, the current reproduction-calculation unit 64 calculates and delivers the motor currents Idc, Iqc as a result of calculations executed according to the following expression (5) using the four quantities obtained by the expressions (2), (3) and (4).

[Expression 5]

$$\begin{bmatrix} I_{dc} \\ I_{qc} \end{bmatrix} = \frac{2}{3} \begin{bmatrix} \dfrac{E_{d\text{-}S}\sin\left(\theta_{dc} - \dfrac{1}{3}\pi\right)I_{0\text{-}FL\text{-}S} - 2V_q^*\sin^2\left(\dfrac{1}{3}\pi\right)I_{0\text{-}S\text{-}W}}{V_q^*\cos\left(\theta_{dc} - \dfrac{1}{3}\pi\right) + V_d^*\sin\left(\theta_{dc} - \dfrac{1}{3}\pi\right)} \\[4mm] \dfrac{E_{d\text{-}S}\cos\left(\theta_{dc} - \dfrac{1}{3}\pi\right)I_{0\text{-}FL\text{-}S} + 2V_d^*\sin^2\left(\dfrac{1}{3}\pi\right)I_{0\text{-}S\text{-}W}}{V_q^*\cos\left(\theta_{dc} - \dfrac{1}{3}\pi\right) + V_d^*\sin\left(\theta_{dc} - \dfrac{1}{3}\pi\right)} \end{bmatrix} \qquad (5)$$

In like manner, when the current-phase determination unit 63 and the current reproduction-calculation unit 64 determines the sampled DC-bus current I0-S as the current of V- phase, the reproduced currents Idc, Iqc are calculated by using the following expression (6) on the basis of the sampled V-phase DC-bus current $I_{0\text{-}S\text{-}S}$, the sampled average DC-bus current $I_{0\text{-}FL\text{-}S}$ and the sampled DC voltage $E_{d\text{-}s}$.

[Expression 6]

$$\begin{bmatrix} I_{dc} \\ I_{qc} \end{bmatrix} = \frac{2}{3} \begin{bmatrix} \dfrac{E_{d\text{-}S}\sin\left(\theta_{dc} - \dfrac{2}{3}\pi\right)I_{0\text{-}FL\text{-}S} + 2V_q^*\sin^2\left(\dfrac{1}{3}\pi\right)I_{0\text{-}S\text{-}V}}{V_q^*\cos\left(\theta_{dc} - \dfrac{2}{3}\pi\right) + V_d^*\sin\left(\theta_{dc} - \dfrac{2}{3}\pi\right)} \\[4mm] \dfrac{E_{d\text{-}S}\cos\left(\theta_{dc} - \dfrac{2}{3}\pi\right)I_{0\text{-}FL\text{-}S} - 2V_d^*\sin^2\left(\dfrac{1}{3}\pi\right)I_{0\text{-}S\text{-}V}}{V_q^*\cos\left(\theta_{dc} - \dfrac{2}{3}\pi\right) + V_d^*\sin\left(\theta_{dc} - \dfrac{2}{3}\pi\right)} \end{bmatrix} \qquad (6)$$

Also, when the sampled DC-bus current $I_{0\text{-}S}$ is determined as the U-phase current, the reproduced currents Idc, Iqc are calculated by using the following expression (7) on the basis of the sampled U-phase DC-bus current $I_{0\text{-}S\text{-}U}$, the sampled average DC-bus current $I_{0\text{-}FL\text{-}S}$ and the sampled DC voltage $E_{d\text{-}S}$.

[Expression 7]

$$\begin{bmatrix} I_{dc} \\ I_{qc} \end{bmatrix} = \frac{2}{3} \begin{bmatrix} \dfrac{E_{d\_S}\sin(\theta_{dc}-\pi)I_{0-FL\_S} - 2V_q^*\sin^2\left(\frac{2}{3}\pi\right)I_{0\_S\_U}}{V_q^*\cos(\theta_{dc}-\pi)+V_d^*\sin(\theta_{dc}-\pi)} \\ \dfrac{E_{d\_S}\cos(\theta_{dc}-\pi)I_{0-FL\_S} + 2V_d^*\sin^2\left(\frac{2}{3}\pi\right)I_{0\_S\_U}}{V_q^*\cos(\theta_{dc}-\pi)+V_d^*\sin(\theta_{dc}-\pi)} \end{bmatrix} \qquad (7)$$

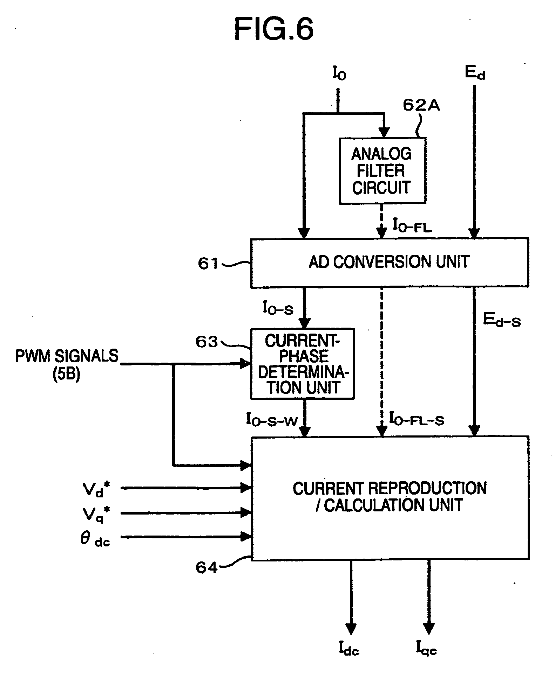

In this embodiment, the current reproduction unit 6 is described as filtering the DC-bus current $I_0$ through digital processing, but the filtering process may be performed in analog fashion, for example, by replacing the filtering unit 62 by an analog filtering circuit 62A consisting of resistors and capacitors, as shown in Fig. 6.

With the current reproduction unit 6 of this embodiment, the average DC-bus current $I_{0-FL}$ and the instantaneous phase-current $I_{0-S}$ for a single phase are utilized simultaneously so that the reproduction of current becomes possible even under the field-weakening control using the over-modulated PWM procedure. Here, the term " simultaneously " simply implies that the quantity obtained by sampling the instantaneous phase-current $I_{0-S}$ and any value of the average DC-bus current $I_{0-FL-S}$ at an rpm greater than N2, are both utilized. For example, two sampling points are designated in diagram (d) of Fig. 5.

In this way, the reproduction of current becomes possible, and hence the over-modulated PWM control using the field weakening control can be used. The over-modulated PWM control enables the voltage applied to the motor to be substantially increased. Namely, as described above with Fig. 1, the voltage can be increased from $V_0$ to $1.27 \times V_0$.

Consequently, since the counter emf induced in the motor can be suppressed to the extent corresponding to the increased voltage, the reactive current to be conducted through the motor can be decreased. As a result, the torque that can be developed by the motor can be improved as shown in Fig. 2.

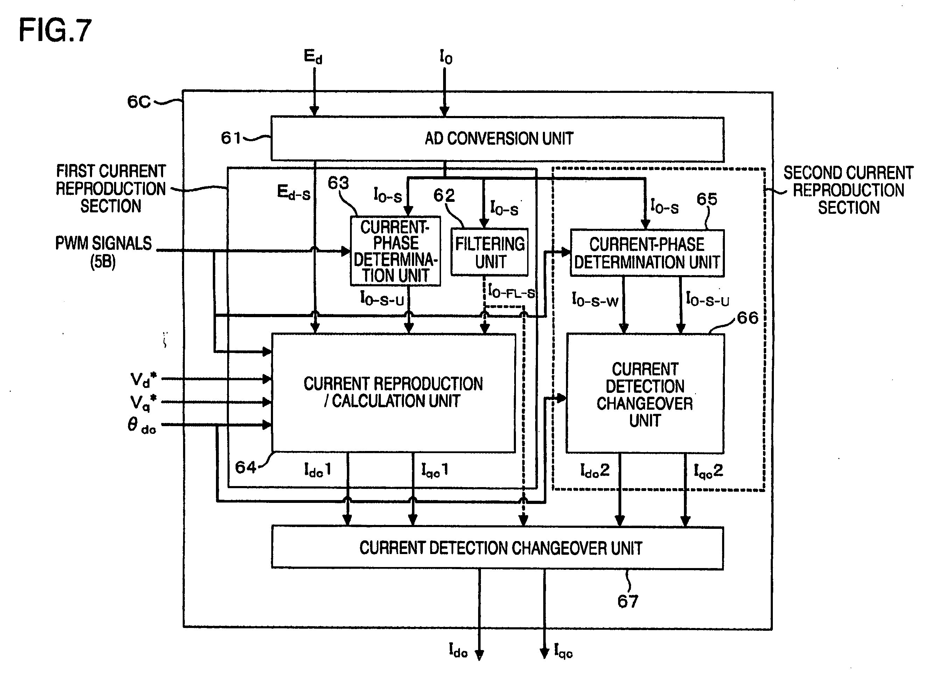

Now, the changeover of current detection methods will be described in reference to Figs. 7, 8 and 9.

Fig. 7 schematically shows a current reproduction unit 6C equipped with a current detection changeover unit 67, which is a variation of the current reproduction unit 6 shown in Fig. 4. Figs. 7 also shows the flow of signal processing in the current reproduction unit 6C. In order to improve the precision in current detection, the current reproduction unit 6C is so designed as to change over between a first current reproduction section (using such a current detecting method described as with Fig. 4) that simultaneously utilizes the average DC-bus current $I_{0-FL}$ and the instantaneous phase current $I_{0-S}$ for a single phase and a second current reproduction section (using a well-known current detection method) that reproduces three-phase currents from the instantaneous phase- currents for two phases.

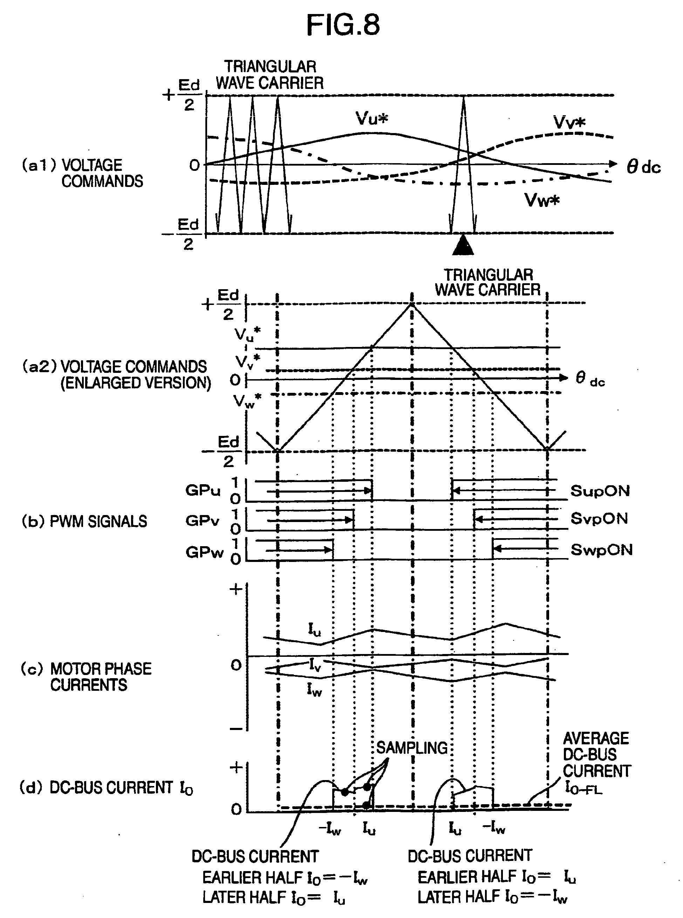

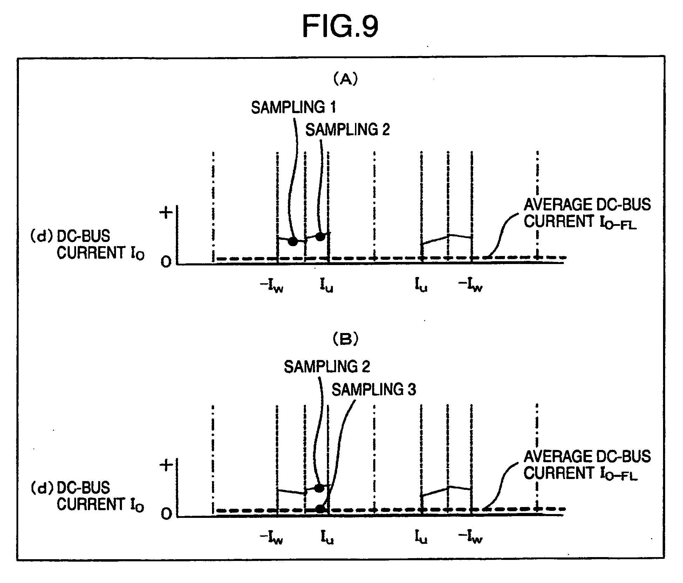

In reference to Figs. 8 and 9, the relationship between the PWM signals and the DC-bus current, observed for motor rpm's equal to or lower than N1, will be described in the case where a control procedure other than the over-modulated PWM procedure (designated by solid curves in Figs. 1 and 2) is used.

Fig. 8 shows the relationship between the PWM signals and the DC-bus current, observed for low speed motor rotations, i.e. rpm's equal to or lower than N1, along with the way both the DC-bus current $I_0$ and the average DC-bus current $I_{0-FL}$ are sampled.

Figs. 9(A) and 9(B) are enlarged versions of Fig. 8(d), prepared for detailed explanation of sampling.

A-part of Fig. 9 shows the way the second current reproduction section performs sampling, the DC-bus current $I_0$ being sampled as sampling 1 and sampling 2.

B-part of Fig. 9 shows the way the first current reproduction section performs sampling, the DC-bus current $I_0$ being sampled as sampling 2 and the average DC-bus current $I_{0-FL}$ as sampling 3.

The structure of the current reproduction unit 6C will now be described briefly in reference to Fig. 7.

A filtering unit 62, a current-phase determination unit 63 and a current reproduction-calculation unit 64 constituting the first current reproduction section in the current reproduction unit 6C, operate in the same manner as the corresponding counterparts shown in Fig. 4 and described above.

The second current reproduction section in the current reproduction unit 6C consists of a current-phase determination unit 65 and a current reproduction-calculation unit 66, and delivers reproduced currents Idc2 and Iqc2. For more detailed description of the current reproduction unit 6C, the reader is requested to refer to JP-A-02-197295. In what follows, description is briefly made of the case to which the waveforms shown in Fig. 8 are related.

As seen in Fig. 7, the current-phase determination unit 65 determines the sampled DC-bus currents $I_{0-S}$ sampled in the AD conversion unit 61 as the instantaneous phase-currents of W- and U-phases on the basis of the PWM signals 5B, and delivers the instantaneous phase-currents for two phases, i.e. the sampled W-phase DC-bus current $I_{0-S-W}$ and the sampled U-phase DC-bus current $I_{0-S-U}$.

The current reproduction-calculation unit 66 derives the V-phase current Iv through the use of the expression (2) regarding the sum of the currents for three phases, on the basis of the thus obtained instantaneous phase-currents for two phases. Then, the current reproduction-calculation unit 66 delivers the reproduced currents Idc2 and Iqc2 through the use of the expression (3) for transforming the U-, V- and W-phase currents into the currents along the d-q axis in the rotating (d-q) frame, on the basis of the sampled W-phase DC-bus current $I_{0-S-W}$, the sampled U-phase DC-bus current $I_{0-S-U}$, the thus obtained V-phase current Iv and the inverter estimated rotating phase θdc.

The current detection changeover unit 67 compares the averaged DC-bus current $I_{0-FL}$ with a preset value, and if the former is equal to or greater than the latter, the current detection changeover unit 67 delivers the reproduced currents Idc2 and Iqc2 calculated by the first current reproduction section as the reproduced currents Idc and Iqc, respectively. In other words, if the averaged DC-bus current $I_{0-FL}$ is equal to or greater than the preset value, the current detection changeover unit 67 selects the first current reproduction-calculation section, while if the averaged DC-bus current $I_{0-FL}$ is smaller than the preset value, the current detection changeover unit 67 selects the second current reproduction-calculation section.

In the above description, the current detection changeover unit 67 changes over the current detection methods on the basis of the comparison of the averaged DC-bus current $I_{0-FL}$ with a preset value. Alternatively, however, the current detection changeover unit 67 may be so designed as to change over the current detection methods by comparing the rpm of the motor 1 with a preset value. In this embodiment, such a preset value is regarded as N1.

In this way, by changing over the first and second current detection methods, the motor phase-currents can be reproduced with high precision from low rpm range up to high rpm range.

Next, the range of rpm's lower than N1, i.e. the range where the electric motor 1 rotates at low speeds, will be explained in reference to Fig. 8. It is to be understood that, in this low rpm range, the AC voltage command values Vu*, Vv*, Vw* are not saturated and there are many triangular wave carriers within one period of the AC voltage/current.

As apparent from the comparison between diagrams (a1) and (a2) of Fig. 8 (for low speed case) and diagrams (a1) and (a2) of Fig. 5 (for high speed case), since the AC voltage command values Vu*, Vv* and Vw* for the range where the motor 1 rotates at low speeds become smaller than those for the range where the motor 1 rotates at high speeds, the time intervals of the conduction of the DC-bus current $I_0$ become shorter in diagram (d) of Fig. 8 (for low speed case) than in diagram (d) of Fig. 5 (for high speed case), and therefore the value of the average DC-bus current $I_{0-FL}$ becomes smaller in diagram (d) of Fig. 8 (for low speed case) than in diagram (d) of Fig. 5 (for high speed case).

With the first current reproduction section (using such a current detection method as described in reference to Fig. 4) that simultaneously utilizes the average DC-bus current $I_{0-FL-S}$ and the instantaneous phase-current $I_{0-S}$ for a single phase, the DC power is calculated from the average DC-bus current $I_{0-FL-S}$ and the DC voltage $E_{d-s}$. Accordingly, when the average DC-bus current $I_{0-FL-S}$ becomes small in the low rpm range, current sampling (i.e. sampling 3 shown in B-pat of Fig. 9 is vulnerable to noise so that precision in current reproduction is degraded.

On the other hand, with the second current reproduction section (using a well-known current detection method) that reproduces three-phase currents from the instantaneous currents for two phases, the instantaneous currents for two phases can be sampled (as samplings 1 and 2) from the DC-bus current $I_0$ that is greater than the average DC-bus current $I_{0-FL}$ as shown in A-part of Fig. 9. Consequently, current production becomes possible without degrading precision even in the low rpm range.

Accordingly, if the second current reproduction section is selected in the low rpm range, current can be detected without degrading precision in detection.

In this way, the phase currents of the motor 1 can be reproduced with high precision from the low rpm range to the high rpm range if the current detection methods are selectively changed over between the low and high rpm ranges. Therefore, it is useful to replace the current reproduction unit 6 by the current reproduction unit 6C shown in Figs. 7, that can change over between the first current reproduction section and the second current reproduction section.

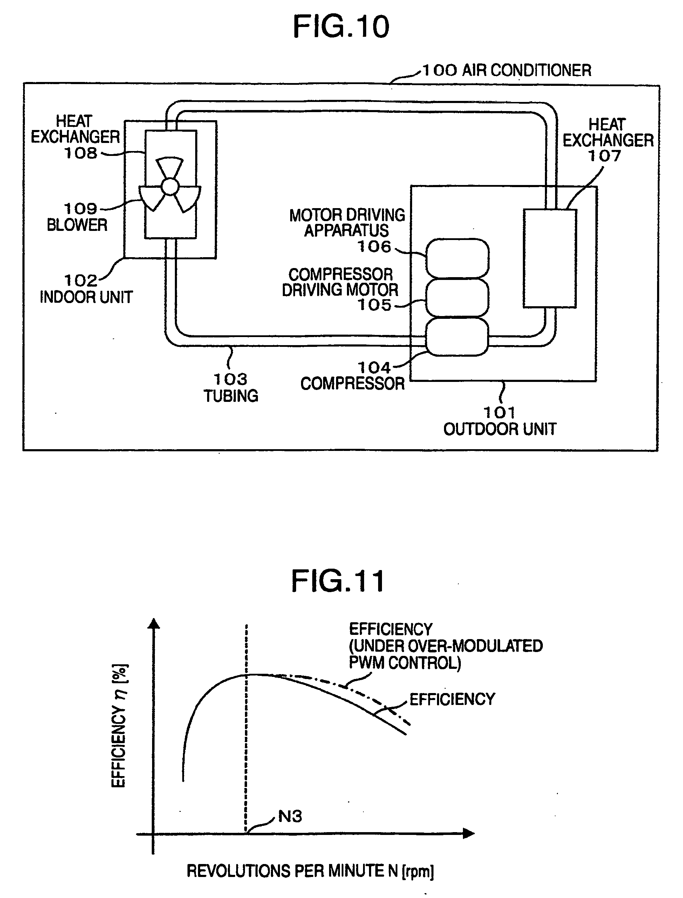

Now, in reference to Figs 10 and 11, description will be made regarding an application of the current detection method of this embodiment to the motor driving apparatus for use with the compressor in an air conditioner.

Fig. 10 schematically shows the entire system of an air conditioner.

An air conditioner 100 consists mainly of an outdoor unit 101, an indoor unit 102 and tubing 103 connecting the outdoor unit 101 and the indoor unit 102. Heat is exchanged between the outdoor unit 101 and the indoor unit 102 by means of refrigerant circulated through the tubing 103.

The outdoor unit 101 for exchanging heat with outdoor space comprises a compressor 104 for compressing refrigerant, a compressor driving motor 105 for driving the compressor 104, a motor driving apparatus 106 for controlling the compressor driving motor 105 and a heat exchanger 107 for exchanging heat between the outdoor and indoor units 101 and 102.

The indoor unit 102 for exchanging heat with indoor space comprises a heat exchanger 108 for exchanging heat with indoor space, and a blower 109 for dispersing heat generated by the heat exchanger 108 into indoor space.

Now, description will be made regarding the efficiency of the compressor driving motor 105 in reference to Fig. 11.

Annual performance factor (APF) has recently come to be used as an index for assessing the performance of an air conditioner in a quasi-operation approximating an actual operation. For APF index, importance is put on the efficiency at a low speed operation with a light load. Accordingly, when the compressor driving motor for use in an air conditioner is designed to be adapted to a low speed operation, the value N3 of rpm at which the efficiency takes the peak value in Fig. 11 must be included in the low rpm range.

Regarding the motor designed for low speed operations, however, the voltage saturation range shown in Fig. 1 is expanded where the motor counter emf exceeds the voltage that the inverter can supply. Consequently, reactive current generated through the field-weakening control is conducted through the motor to a greater extent in the high rpm range. As a result, as shown with solid curve in Fig 11, the compressor driving motor incurs a large degradation of efficiency in the high rpm range.

When the current detection method according to the first embodiment is applied to an air conditioner, the reproduction of motor current becomes possible even in the case where the voltage command values overlap in the over-modulated PWM control. In other words, the voltage that the inverter can supply can be increased to the extent that the waveforms of the AC voltage command values approach rectangular waveforms (to the extent that rpm approaches N2 and the voltage approaches $1.27 \times V_0$ in Fig. 1) so that the reactive curent conducted through the motor can be decreased.

In this way, the increase in the voltage that the inverter can supply, can decrease the reactive current flowing in the field-weakening control even when the DC voltage Ed is constant, as shown in Fig. 1. Consequently, the loss due to current can be decreased, and also the degradation of efficiency can be suppressed in the high rpm range exceeding the rpm of N3 at which the efficiency takes a peek, as shown with long-and-short dash curve in Fig. 11. Further, as shown in Fig. 2, the torque that the compressor driving motor can generate is increased, that is, the motor can generate higher mechanical outputs, in the high rpm range.

As described above, if the the current detection method of this embodiment and the over-modulated PWM control are used in combination for the compressor driving system of an air conditioner, high efficiency can be enjoyed even when the compressor driving motor is operated at high rpm's. This means that the circulation rate of refrigerant can be increased, that is, the output of the air-conditioner can be increased.

[Embodiment 2]

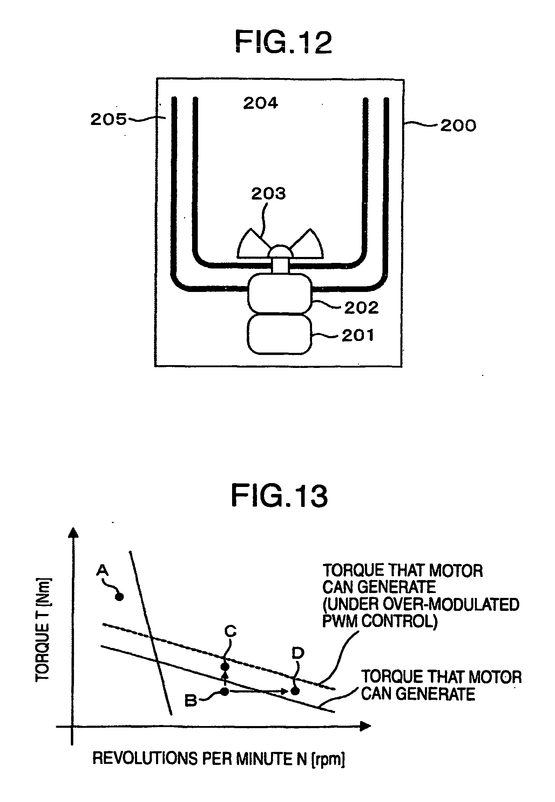

A second embodiment of this invention in which the motor driving apparatus using the current detection method of the first embodiment is applied to the drive of the agitator of a washer, will now be described in reference to Figs. 12 and 13.

Fig. 12 depicts in vertical cross-section the entire structure of a washer.

A washer 200 comprises a tub 205, a basket 204, an agitator 203 for agitating water and wash in the basket 204, an agitator driving motor 202 for rotating the agitator 203, and a motor driving apparatus 201 for controlling the agitator driving motor 202.

Now, description will be made regarding the operating points of the agitator driving motor 202 in reference to Fig. 13 which graphically shows the relationship between the rpm and the torque, of the agitator driving motor 202.

At the time of washing, the agitator driving motor 202 operates at the operating point A corresponding to the operation at low rpm with high torque, and, at the time of dehydration, it operates under the field weakening control at the operating point B corresponding to the operation at high rpm with low torque. In order to cope with the growing demands for increasing the washer capacity and shortening the time for dehydration, the operating point of the agitator driving motor 202 must be shifted from the point B to the point C or D.

However, the agitator driving motor 202 normally operates at the operating point A which corresponds to the low rpm operation with height torque and high efficiency. Therefore, a permanent magnet motor is used as the agitator driving motor for the purpose of intensifying the internal magnetic flux. As described above, with the permanent magnet motor, the torque that the motor can generate is lowered due to the expansion of the voltage saturation range at high rpm operations so that the motor cannot be operated at the operating points C and D.

When the current detection method according to this embodiment is applied to a washer, the reproduction of motor current becomes possible even in the case where the voltage command values overlap in the over-modulated PWM control. In other words, the voltage that the inverter can supply can be increased to the extent that the waveforms of the AC voltage command values approach rectangular waveforms.

As apparent from Fig. 2, the increase in the voltage that the inverter can supply results in the increase in the torque that the motor can generate at operation under the field-weakening control. Accordingly, the operating characteristic of the agitator driving motor 202 can be shifted from the solid line to the dotted lime in Fig. 13. Hence, the agitator driving motor 202 can be operated at the operating points C and D.

Since the agitator driving motor 202 can now operate at the operating point C where it can rotate at the same rpm as at the operating point B but with greater torque, the capacity of the washer can be increased if using such an agitator driving motor. Further, since the agitator driving motor 202 can also operate at the operating point D where it can rotate with the same torque as at the operating point B but at higher rpm, the time for dehydration can be shortened.

As described above, if the current detection method according to this embodiment is applied to a washer, the current sensor that must otherwise be used for the agitator driving motor can be dispensed with, so that the size and cost of the washer can be reduced. Further, since the current detection method of this embodiment and the over-modulated PWM control are used in combination, the agitator driving motor can rotate at high rpm's, so that the time for dehydration can be shortened. Moreover, since the agitator driving motor can rotate with high torque, the capacity of the washer can be increased.

It should be further understood by those skilled in the art that although the foregoing description has been made on embodiments of the invention, the invention is not limited thereto and various changes and modifications may be made within the scope of the appended claims.

**Claims**

1. An inverter control apparatus (5) incorporating therein a current reproduction unit (6)
which inputs information from a DC-bus current detector (4) for detecting the instantaneous phase currents that flows into an electric motor (1) and that is contained in the DC-bus current flowing into the inverter (2) from a DC power source (3), and
which reproduces phase currents that flow into the motor (1) on the basis of the values of the instantaneous phase currents and the voltage commands for the voltages to be applied to the inverter (2) are calculated by using the phase currents, **characterized in that** by comprising an amount of the averaged DC-bus current with a preset value in the voltage saturation range, the current reproduction unit (6) calculates the phase currents that flow into the motor (1) on the basis of the average DC-bus current ($I_{0\text{-FL-S}}$) obtained through filtering the DC-bus current, an instantaneous phase current for a single phase ($I_{0\text{-S-U}}$, $I_{0\text{-S-V}}$, $I_{0\text{-S-W}}$), the sampled DC voltage ($E_{d\text{-s}}$) and the rotation angle ($\theta_{dc}$) of the rotating frame (d-q).

2. An inverter control apparatus (5) as claimed in claim 1, wherein the voltage saturation range is the range of rpm's equal to or greater than a preset value.

3. An inverter control apparatus (5) as claimed in claim 1 or 2,
wherein the current reproduction unit (6C) comprises
a first current reproduction section for calculating the phase currents that flow into the motor (1) on the basis of the average DC-bus current obtained through filtering the DC-bus current and an instantaneous phase current for a single phase; and
a second current reproduction section for calculating the phase currents that flow into the motor (1) by using instantaneous phase currents for two phases; and
wherein, in the voltage saturation range, the current reproduction unit (6C) calculates the voltage commands for the voltages to be applied to the inverter (2) by using the phase currents calculated by the first current reproduction section.

4. An inverter control apparatus (5) as claimed in claim 3, wherein the voltage saturation range is the range of rpm's equal to or greater than a preset value.

5. An inverter control apparatus (5) as claimed in claim 4, wherein when the motor (1) is operated at rpm's less than a preset value, the current reproduction unit (6C) calculates the voltage commands for the voltages to be applied to the inverter (2) by using the phase currents calculated by the second current reproduction section.

6. An inverter control apparatus (5) as claimed in claim 3, wherein the current reproduction unit (6C) further comprises a current detection changeover unit (67) for changing over between the first current reproduction section for calculating the phase currents that flow into the motor in the voltage saturation range and the second current reproduction section for calculating the phase currents that flow into the motor in the range of rpm's other than the voltage saturation range.

7. An air conditioner wherein the inverter control apparatus (5) according to any of claims 1 through 6 is applied to the motor driving apparatus (106) for driving the compressor driving motor (105).

8. An air conditioner as claimed in claim 7, wherein the inverter control apparatus (5) is operated under the over-modulated PWM control in high rpm range so as to reduce the phase currents that flow into the motor driving apparatus (106).

9. A washer wherein the inverter control apparatus (5) according to any of claims 1 through 6 is applied to the motor driving apparatus (201) for driving the motor (202) that rotates agitator (203) or the basket (204).

10. A washer as claimed in claim 9, wherein the inverter control apparatus (5) is operated under the over-modulated PWM control in high rpm range so as to increase to torque of the motor (202).


**Patentansprüche**

1. Umrichtersteuerungsvorrichtung (5) mit einer Stromrekonstruktionseinheit (6),
   welche Informationen von einem Gleichstrombus-Stromdetektor (4) ausgibt, zur Erfassung der momentanen Phasenströme, die in einen elektrischen Motor (1) fließen und die in dem Gleichstrombus-Strom enthalten sind, der von einer Gleichstromquelle (3) in den Umrichter (2) fließt, und
   welche Phasenströme, die in den Motor (1) fließen, auf der Grundlage von Werten der momentanen Phasenströme rekonstruiert, wobei die Spannungssteuersignale der an den Umrichter (2) anzulegenden Spannungen unter Verwendung der Phasenströme berechnet werden,
   **dadurch gekennzeichnet, dass** bei einem vorbestimmten Wert des gemittelten Gleichstrombus-Stroms im Spannungssättigungsbereich die Stromrekonstruktionseinheit (6) die Phasenströme, die in den Motor (1) fließen, auf der Grundlage des gemittelten Gleichstrombus-Stroms ($I_{0-FL-S}$) berechnet, der durch Filtern des Gleichstrombus-Stroms, eines momentanen Phasenstroms für eine einzelne Phase ($I_{0-S-U}$, $I_{0-S-V}$, $I_{0-S-W}$), der erfassten Gleichspannung ($E_{d-S}$) und des Drehwinkels ($\theta_{dc}$) des Drehrahmens (d-q) erhalten wird.

2. Umrichtersteuerungsvorrichtung (5) nach Anspruch 1, wobei der Spannungssättigungsbereich der Bereich ist, bei dem die Drehzahl größer oder gleich einem vorbestimmten Wert ist.

3. Umrichtersteuerungsvorrichtung (5) nach Anspruch 1 oder 2, wobei die Stromrekonstruktionseinheit (6C) einen ersten Stromrekonstruktionsabschnitt aufweist zum Berechnen der Phasenströme, die in den Motor (1) fließen, auf der Grundlage des gemittelten Gleichstrombus-Stroms, der erhalten wird durch Filtern des Gleichstrombus-Stroms und eines momentanen Phasenstroms für eine einzelne Phase, und einen zweiten Stromrekonstruktionsabschnitt zum Berechnen der Phasenströme, die in den Motor (1) fließen unter Verwendung momentaner Phasenströme für zwei Phasen, wobei im Sättigungsspannungsbereich die Stromrekonstruktionseinheit (6C) die Spannungssteuersignale für die an den Umrichter (2) anzulegenden Spannungen berechnet unter Verwendung der durch den ersten Stromrekonstruktionsabschnitt berechneten Phasenströme.

4. Umrichtersteuerungsvorrichtung (5) nach Anspruch 3, wobei der Spannungssättigungsbereich der Bereich ist, in dem die Drehzahl größer oder gleich einem vorbestimmten Wert ist.

5. Umrichtersteuerungsvorrichtung (5) nach Anspruch 4, wobei, wenn der Motor (1) mit einer Drehzahl betrieben wird, die kleiner als ein vorgegebener Wert ist, die Stromrekonstruktionseinheit (6C) die Spannungssteuersignale für die an den Umrichter (2) anzulegenden Spannungen berechnet unter Verwendung der Phasenströme, die von dem zweiten Stromrekonstruktionsabschnitt berechnet wurden.

6. Umrichtersteuerungsvorrichtung (5) nach Anspruch 3, wobei die Stromrekonstruktionseinheit (6C) ferner eine Stromerfassungsumschalteinheit (67) aufweist zum Umschalten zwischen dem ersten Stromrekonstruktionsabschnitt für die Berechnung der Phasenströme, die in den Motor im Sättigungsspannungsbereich fließen, und dem zweiten Stromrekonstruktionsabschnitt zum Berechnen der Phasenströme, die in den Motor in dem Drehzahlbereich fließen, der von dem Sättigungsspannungsbereich verschieden ist.

7. Klimaanlage, bei der die Umrichtersteuerungsvorrichtung (5) nach einem der Ansprüche 1 bis 6 bei der Motorsteuerungsvorrichtung (106) zum Steuern des Kompressorantriebsmotors (105) verwendet wird.

8. Klimaanlage nach Anspruch 7, bei der die Umrichtersteuerungsvorrichtung (5) im hohen Drehzahlbereich im übermodulierten PWM-Modus betrieben wird, um die Phasenströme zu reduzieren, die in die Motorsteuerungsvorrichtung (106) fließen.

9. Waschmaschine, bei der die Umrichtersteuerungsvorrichtung (5) nach einem der Ansprüche 1 bis 6 bei der Motorsteuerungsvorrichtung (201) zum Steuern des Motors (202), der das Rührwerk (203) oder die Trommel (204) antreibt, verwendet wird.

10. Waschmaschine nach Anspruch 9, bei der die Umrichtersteuerungsvorrichtung (5) im hohen Drehzahlbereich im übermodulierten PWM-Steuermodus betrieben wird, um das Drehmoment des Motors (202) zu steigern.

**Revendications**

1. Appareil de contrôle d'inverseur (5) comprenant une unité de reproduction de courant (6)
qui entre des informations provenant d'un détecteur de courant de bus à CC (4) permettant de détecter les courants de phase instantanés qui circulent dans un moteur électrique (1) et qui sont contenus dans le courant de bus à CC circulant dans l'inverseur (2) provenant d'une source de courant continu (3), et
qui reproduit les courants de phase qui circulent dans le moteur (1) sur la base des valeurs des courants de phase instantanés et les commandes de tension pour les tensions devant être appliquées à l'inverseur (2) sont calculées en utilisant les courants de phase, **caractérisés en ce que**, en comprenant une quantité de courant de bus à CC **moyen** avec une valeur déterminée au préalable dans la plage de saturation de la tension, l'unité de reproduction de courant (6) calcule les courants de phase qui circulent dans le moteur (1) sur la base du courant de bus à CC moyen ($I_{0\text{-}FL\text{-}S}$) obtenu en filtrant le courant de bus à CC , un courant de phase instantané pour une phase ($I_{O\text{-}S\text{-}U}$, $I_{O\text{-}S\text{-}V}$, $I_{0\text{-}S\text{-}W}$), la tension continue échantillonnée ($E_{d\text{-}s}$) et l'angle de rotation ($0_{dc}$) du châssis rotatif (d-9).

2. Appareil de contrôle d'inverseur (5) comme revendiqué dans la revendication 1, dans lequel la plage de saturation de la tension représente la plage de régime moteur égale ou supérieure à une valeur déterminée au préalable.

3. Appareil de contrôle d'inverseur (5) comme revendiqué dans la revendication 1 ou 2,
dans lequel l'unité de reproduction de courant (6C) comprend
une première partie de reproduction de courant permettant de calculer les courants de phase qui circulent dans le moteur (1) sur la base du courant de bus à CC moyen obtenu en filtrant le courant de bus à CC et un courant de phase instantané pour une phase ; et
une seconde partie de reproduction de courant permettant de calculer les courants de phase qui circulent dans le moteur (1) en utilisant les courants de phase instantanés pour deux phases ; et
dans lequel, dans la plage de saturation de la tension, l'unité de reproduction de courant (6C) calcule les commandes de tension pour les tensions devant être appliquées à l'inverseur (2) en utilisant les courants de phase calculés par la première partie de reproduction de courant.

4. Appareil de contrôle d'inverseur (5) comme revendiqué dans la revendication 3, dans lequel la plage de saturation de la tension est la plage de régime moteur égale ou supérieure à une valeur prédéterminée.

5. Appareil de contrôle d'inverseur (5) comme revendiqué dans la revendication 4, dans lequel, quand le moteur (1) fonctionne à un régime moteur inférieur à une valeur déterminée au préalable, l'unité de reproduction de courant (6C) calcule les commandes de tension pour les tensions devant être appliquées à l'inverseur (2) en utilisant les courants de phase calculés par la seconde partie de reproduction de courant.

6. Appareil de contrôle d'inverseur (5) comme revendiqué dans la revendication 3, dans lequel l'unité de reproduction de courant (6C) comprend en outre une unité de commutation de détection de courant (67) permettant de commuter entre la première partie de reproduction de courant permettant de calculer les courants de phase qui circulent dans le moteur dans la plage de saturation de la tension et la seconde partie de reproduction de courant permettant de calculer les courants de phase qui circulent dans le moteur dans la plage de régime moteur autre que la plage de saturation de la tension.

7. Un climatiseur dans lequel l'appareil de contrôle d'inverseur (5) selon l'une quelconque des revendications 1 à 6 est appliqué au dispositif d'entraînement de moteur (106) permettant d'entraîner le moteur d'entraînement de compresseur (105).

8. Climatiseur selon la revendication 7, dans lequel l'appareil de contrôle d'inverseur (5) fonctionne sous contrôle PWM (modulation d'impulsions en durée) surmodulé dans une plage de régime moteur élevée afin de réduire les courants de phase qui circulent dans le dispositif d'entraînement de moteur (106).

9. Machine à laver dans laquelle l'appareil de contrôle d'inverseur (5) selon l'une quelconque des revendications 1 à 6 est appliqué au dispositif d'entraînement de moteur (201) permettant d'entraîner le moteur (202) qui fait tourner l'agitateur (203) ou le panier (204).

10. Machine à laver comme revendiqué dans la revendication 9, dans laquelle l'appareil de contrôle d'inverseur (5) fonctionne sous contrôle PWM (modulation d'impulsions en durée) surmodulé dans une plage de régime moteur élevée afin d'augmenter le couple du moteur (202).

# FIG.1

VOLTAGE SATURATION RANGE
(OVER-MODULATED PWM CONTROL RANGE)

VOLTAGE SATURATION RANGE
(RECTANGULAR WAVE CONTROL RANGE)

VOLTAGE THAT INVERTER CAN SUPPLY
(UNDER OVER-MODULATED PWM CONTROL)

VOLTAGE THAT INVERTER CAN SUPPLY

UNDER OVER-MODULATED
PWM CONTROL

VOLTAGE APPLIED TO MOTOR

OUTPUT CURRENT

$1.27*V_0$

$V_0$

VOLTAGE V [V], CURRENT [A]

N1 [rpm]   N2 [rpm]

REVOLUTIONS PER MINUTE N [rpm]

# FIG.2

VOLTAGE SATURATION RANGE

VOLTAGE SATURATION RANGE
(UNDER OVER-MODULATED PWM CONTROL)

TORQUE THAT MOTOR CAN
GENERATE
(UNDER OVER-MODULATED
PWM CONTROL)

TORQUE THAT MOTOR
CAN GENERATE

TORQUE T [Nm]

N1 [rpm]   N2 [rpm]

REVOLUTIONS PER MINUTE N [rpm]

15

# FIG.3

EP 2 262 092 B1

# FIG.4

$I_0$  $E_d$

$I_0$ ↓ $E_d$ ↓

61 — AD CONVERSION UNIT

$I_{0-S}$ $I_{0-S}$ $E_{d-S}$

63 — CURRENT-PHASE DETERMINA-TION UNIT

PWM SIGNALS (5B)

FILTERING UNIT — 62

$I_{0-S-W}$ $I_{0-FL-S}$

$V_d^*$
$V_q^*$
$\theta_{dc}$

CURRENT REPRODUCTION / CALCULATION UNIT

64 —

$I_{dc}$  $I_{qc}$

# FIG.5

(a1) VOLTAGE COMMANDS

$V_u^*$ $V_v^*$ $V_w^*$

$\theta_{dc}$

$+\dfrac{Ed}{2}$

O

$-\dfrac{Ed}{2}$

TRIANGULAR WAVE CARRIER

(a2) VOLTAGE COMMANDS (ENLARGED VERSION)

$V_u^*$ $V_v^*$

$+\dfrac{Ed}{2}$

O

$\theta_{dc}$

$-\dfrac{Ed}{2}$

$V_w^*$

(b) PWM SIGNALS

GPu $\begin{smallmatrix}1\\0\end{smallmatrix}$ SupON

GPv $\begin{smallmatrix}1\\0\end{smallmatrix}$ SvpON

GPw $\begin{smallmatrix}1\\0\end{smallmatrix}$ SwpOFF

(c) MOTOR PHASE CURRENTS

+

$I_u$

O

$I_v$

$I_w$

−

SAMPLING

(d) DC-BUS CURRENT $I_0$

+

DC-BUS CURRENT $I_0 = -I_w$

O

AVERAGE DC-BUS CURRENT $I_{0-FL}$

# FIG.6

$I_0$       $E_d$

62A

ANALOG
FILTER
CIRCUIT

$I_{O-FL}$

61 — AD CONVERSION UNIT

$I_{O-S}$      $E_{d-S}$

63 — CURRENT-
PHASE
DETERMINA-
TION UNIT

PWM SIGNALS
(5B)

$I_{O-S-W}$    $I_{O-FL-S}$

$V_d{}^*$

$V_q{}^*$

$\theta_{dc}$

CURRENT REPRODUCTION
/ CALCULATION UNIT

64

$I_{dc}$      $I_{qc}$

# FIG.7

EP 2 262 092 B1

# FIG.8

(a1) VOLTAGE COMMANDS

(a2) VOLTAGE COMMANDS (ENLARGED VERSION)

(b) PWM SIGNALS

(c) MOTOR PHASE CURRENTS

(d) DC-BUS CURRENT $I_0$

DC-BUS CURRENT
EARLIER HALF $I_0 = -I_w$
LATER HALF $I_0 = I_u$

DC-BUS CURRENT
EARLIER HALF $I_0 = I_u$
LATER HALF $I_0 = -I_w$

# FIG.9

(A)

SAMPLING 1
SAMPLING 2

(d) DC-BUS
CURRENT $I_O$

AVERAGE DC-BUS
CURRENT $I_{O-FL}$

$-I_w$     $I_u$          $I_u$     $-I_w$

(B)

SAMPLING 2
SAMPLING 3

(d) DC-BUS
CURRENT $I_O$

AVERAGE DC-BUS
CURRENT $I_{O-FL}$

$-I_w$     $I_u$          $I_u$     $-I_w$

# FIG.10

100 AIR CONDITIONER

HEAT EXCHANGER 108

109 BLOWER

102 INDOOR UNIT

103 TUBING

MOTOR DRIVING APPARATUS 106

COMPRESSOR DRIVING MOTOR 105

104 COMPRESSOR

HEAT EXCHANGER 107

101 OUTDOOR UNIT

# FIG.11

EFFICIENCY (UNDER OVER-MODULATED PWM CONTROL)

EFFICIENCY

EFFICIENCY $\eta$ [%]

N3

REVOLUTIONS PER MINUTE N [rpm]

# FIG.12

# FIG.13

TORQUE THAT MOTOR
CAN GENERATE
(UNDER OVER-MODULATED
PWM CONTROL)

TORQUE THAT MOTOR
CAN GENERATE

TORQUE T [Nm]

REVOLUTIONS PER MINUTE N [rpm]

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008079377 A1
- JP 2197295 A
- JP 2003219678 A
- JP 2009124869 A